# EUROPEAN PATENT SPECIFICATION

(11) **EP 2 805 528 B1**
(45) Date of publication and mention of the grant of the patent: **30.03.2016**
(21) Application number: 13713498.7
(22) Date of filing: 11.01.2013
(51) Int. Cl.: H02J 7/00, H04R 5/02, H04R 5/04, H04S 3/00, H04S 5/00, H04S 7/00

(54) **MULTI-CHANNEL AUDIO RENDERING**
MEHRKANALIGE AUDIOWIEDERGABE
RENDU AUDIO MULTI-CANAL

(30) Priority: 17.01.2012 US 201261587248 P
(43) Date of publication of application: 26.11.2014
(73) Proprietor: Gibson Innovations Belgium NV, 3001 Leuven (BE)
(72) Inventor: CHOISEL, Sylvain Jean, NL-5656 AE Eindhoven (NL); ROSKAM, Frédéric, NL-5656 AE Eindhoven (NL)
(74) Representative: Alt, Michael
(86) International application number: PCT/IB2013/050268
(87) International publication number: WO 2013/108164

(56) References cited:
- WO-A2-03/088711
- JP-A- 2006 041 997
- JP-A- 2006 129 147
- US-A1- 2009 110 204

## Description

### FIELD OF THE INVENTION

The invention relates to multi-channel audio rendering and in particular, but not exclusively, to a home cinema/ surround sound rendering system using wireless speaker units.

### BACKGROUND OF THE INVENTION

Multi-channel audio rendering and in particular multi-channel spatial sound rendering beyond simple stereo has become commonplace through applications such as surrounds sound home cinema systems. Typically such systems use loudspeakers positioned at specific spatial positions relative to a listening position. For example, a 5.1 home cinema system provides spatial sound via five loudspeakers being positioned with one speaker directly in front of the listening position (the centre channel), one speaker to the front left of the listening position, one speaker to the front right of the listening position, one speaker to the rear left of the listening position, and one speaker to the rear right of the listening position. In addition, a non-spatial low frequency speaker is provided.

Such conventional systems are based on the reproduction of audio signals at specific nominal positions relative to the listening position. One speaker is typically provided for each audio channel and therefore speakers must be positioned at locations corresponding to the predetermined or nominal positions for the system.

A major detracting factor for multichannel loudspeaker systems (such as 5.1 systems) is the need for wires to all the speakers. Due to the restrictions in the positions of the loudspeakers this typically results in wires crossing from one side of a room to another. Only few people are willing to invest time and money required to hide the wires by integrating them into e.g. the walls. Also, such a solution further restricts and encumbers later changes in the setup, e.g. when adjusting for a new furniture layout.

Therefore, systems have been developed that use wireless technology to avoid the speaker wires. However, such wireless speakers require power and therefore need to be connected to external power sources (such as mains power outlets) or need to incorporate batteries. However, having to connect speakers to a power outlet is considered impractical and inconvenient by most people. In a sense, the need to connect a speaker to a power outlet merely changes the purpose of the wired speaker connections allowing them to terminate at the nearest power outlet rather than at the driving unit. However, it does not completely do away with the basic need for wires.

In the end, as wireless technology reaches a maturity level that enables audio to be broadcasted throughout a room (or even a house) in lossless quality, the main obstacle to truly wireless loudspeakers tends to be the power supply. While battery technologies are expected to keep improving in the coming years, there is generally a need for recharging at relatively frequent intervals.

The main discomfort in the charging process is that the product (in the present case, the loudspeaker) cannot always be used in the desired location during charging. Typically, the recharging requires positioning close to a power outlet, or that the loudspeaker is moved to a charging position away from its normal usage location. Thus, when the need for charging arises, e.g. while the consumer is watching a movie, the experience will be interrupted, and the user will need to wait until the battery is charged before he can use the system.

Another charging option is to replace the depleted battery by a fully charged battery. This, however, reveals the battery and the technical aspects of the charging process to the public and is often considered inconvenient and cumbersome. Furthermore, if the battery has to be removed from the wireless speaker in order to be charged, continuous operation during charging requires a different battery to be inserted instead during charging of the first battery. However, this requires that more batteries than wireless speakers are available in the system.

Hence, an improved spatial audio rendering system would be advantageous and in particular a system allowing increased flexibility, facilitated operation, reduced need for wiring, increased practicality, facilitated battery charging and/or an improved user experience would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention there is provided a multi-channel audio rendering system comprising: an audio renderer for generating audio signals for a plurality of audio channels and for transmitting the audio signals; a plurality of interchangeable speaker units , each speaker unit comprising: a battery, an audio transducer for rendering an audio signal of a linked audio channel of the plurality of audio channels, a first coupling for coupling the speaker unit to a charging unit; a power control circuit coupled to the first coupling and the battery and arranged to charge the battery when a supply power is received at the first coupling from an attached charging unit; at least one charging unit, the at least one charging unit being associated with a first audio channel of the plurality of audio channels, and comprising: a second coupling for coupling to a first coupling of an attached speaker unit, the attached speaker unit being a speaker unit of the plurality of interchangeable speaker units; a power supply source for providing a supply power to the first coupling of the attached speaker unit; a linking circuit for linking the attached speaker unit to the first audio channel.

The invention may provide a more flexible and/or practical multi-channel audio rendering system. The system can use interchangeable speaker units which can power circuits using an internal battery. This may allow some fully wireless speaker positions to be established thereby eliminating the requirement for wires for one or more speaker positions while at the same time providing a user friendly approach for recharging. The functionality split and interworking of charging units and interchangeable speaker units may allow facilitated charging and may allow a continuous use of the system. In particular, no additional batteries are needed and speaker units may be used during charging in most implementations.

Indeed, the rendering system may facilitate the whole process of charging batteries as it may allow users to swap the speaker units rather than only the batteries. Also the approach may avoid a requirement that all speaker positions must be close to a power outlet. The system may be ready to use during charging and with all speakers in their nominal positions.

Each charging unit may be (semi) permanently associated or linked to a specific channel of the plurality of audio channels. The speaker units may not be permanently associated with any specific spatial audio channel or indeed with any specific charging unit. Rather, in most implementations, the speaker units can freely be swapped between different charging units, speaker positions and/or audio channels. The speaker units may only be linked to specific audio channels via their attachment to a charging unit (or speaker base).

In some embodiments, the system may comprise a plurality of speaker bases of which the charging unit may be one. At least one of the speaker bases may not be arranged to provide a supply power to an attached speaker unit. The system may include a linking circuit for each of the plurality of audio channels, each linking circuit being arranged to link one audio channel of the plurality of audio channels to a speaker unit, the audio channel being an audio channel associated with a speaker base to which the speaker unit is attached. At least one linking circuit is a wireless linking circuit arranged to receive the audio channel from the audio renderer by wireless communication. The at least one (wireless) linking circuit is powered by the battery of the associated speaker unit. Each of the linking circuits may be comprised in a speaker base or in a speaker unit.

In some embodiments, a number of speaker bases arranged to provide a supply power to an attached speaker unit is at least half the number of speaker units.

In some embodiments, the system may comprise a power amplifier for each speaker unit, and specifically each speaker unit may comprise a power amplifier. In some embodiments, the system may comprise a power amplifier for each speaker base, and specifically each speaker base may comprise a power amplifier.

One or more speaker units may comprise a plurality of audio transducers. For example, a speaker unit may comprise a high frequency audio transducer and a low frequency audio transducer (such as a woofer and tweeter driver). In addition, the speaker unit may include passive or active cross-over filter functionality, combined or separate power amplifiers for the audio transducers etc.

In contrast to the prior art wherein each loudspeaker is typically a separate, integral and complete unit for rendering a provided signal, the speaker unit in accordance with the invention may not be complete and self-consistent for at least one speaker position. Thus, for at least one of the audio channels, the operation of the speaker unit is dependent on the attachment to a charging unit.

In accordance with an optional feature of the invention, the charging unit is coupled to an audio output of the audio renderer via a wired connection, the audio output outputting an audio signal for the first audio channel; and wherein the charging unit is arranged to drive the sound transducer of the attached speaker unit in accordance with the audio signal for the first audio channel.

This may provide an improved user experience in many scenarios and may specifically facilitate setup of the rendering system and/or reduce complexity and/or cost.

For example, the front speaker positions for a surround sound setup are typically close to the position of the main unit comprising the audio renderer. Accordingly, wired connections may easily be provided to these positions. Such wired connections can directly provide the drive signals for the audio transducers of the speaker units at these positions thereby avoiding the need for wireless technology. The rear speaker positions may be supported wirelessly.

In some embodiments, the wired connection may provide an audio drive signal for an audio transducer of a speaker unit attached to the charging unit. In some embodiments, the wired connection may supply power to the charging unit. In some embodiments, the wired connection may provide both an audio drive signal for an audio transducer of a speaker unit attached to the charging unit and also supply power to the charging unit.

In accordance with an optional feature of the invention, the multi-channel audio rendering system further comprises at least a first speaker base, the first speaker base being associated with a second audio channel of the plurality of audio channels, the first speaker base comprising: a third coupling for coupling to a first coupling of a speaker base attached speaker unit, the speaker base attached speaker unit being a speaker unit of the plurality of speaker units; and a linking circuit for linking the speaker base attached speaker unit to the second audio channel.

This may provide an improved user experience in many scenarios and may specifically allow a very flexible and user friendly system wherein a user may freely move speaker units between charging units/ speaker bases.

In some embodiments all charging units/speaker bases or all speaker units may comprise wireless receivers for receiving an audio signal of a linked/associated audio channel.

The approach may provide an improved arrangement by splitting functionality between speaker bases/ charging units and speaker units. Each of the speaker bases/ charging units may be associated or linked to one audio channel. The speaker units may not inherently be associated with any specific audio channel or indeed with any specific speaker base or charging unit. Rather, in most implementations, the speaker units can freely be swapped between the speaker bases/ charging units. The speaker units are only linked to specific channels of the audio channels vie the linking provided by the speaker base/charging unit to which they are attached.

A speaker base may not have any functionality for charging a battery of a speaker unit. A charging unit may also be considered to be a speaker base with additional functionality for charging the battery (if external power is provided).

The system may in use have a subset of the speaker bases acting as charging units allowing the speaker units to be recharged, and another subset of the speaker bases for which the only power source is the battery of the attached speaker unit. Thus, external power is only required for the subset of the speaker bases that are also used as charging units (e.g. only for the front speakers of a home cinema system) whereas other speaker bases may be fully wireless and do not require wires for providing power or for providing the audio signal.

In many embodiments, each of the speaker units can be attached to any of the speaker bases/ charging units. Thus, the speaker units can freely be moved between any of the speaker bases/charging units. Each speaker base/charging unit may be associated or linked with a specific audio channel whereas none of the speaker units may be associated or linked with any specific audio channel (apart from via the speaker base/ charging unit to which they are attached). The communication circuit of the audio renderer may comprise wireless communication means for communicating with wireless receivers of at least some speaker bases/ charging units or at least some speaker units.

The audio renderer may comprise a communication circuit which in some embodiments comprises wireless communication means for communicating with wireless receivers of one or more of the speaker bases/charging units or the speaker units. The audio renderer may comprise a communication circuit which in some embodiments comprise wired communication means for communicating with at least one speaker base/ charging unit through wired communication links.

In accordance with an optional feature of the invention, the first speaker base comprises a power circuit for powering the first speaker base using power of the battery of the speaker base attached speaker unit received via the third coupling.

This may provide an improved user experience in many scenarios and may specifically allow a very flexible and user friendly system. The approach may specifically allow fully wireless speaker bases to be used with fully wireless speaker units, thereby providing a fully wireless sound source implementation while allowing for e.g. easy charging and substantially uninterrupted use of the system during charging.

The first speaker base may be a charging unit to which no external power is provided.

In accordance with an optional feature of the invention, the first speaker base comprises a wireless receiver for receiving an audio signal of the second audio channel from the audio renderer; and an audio driver for driving the speaker base attached speaker unit in response to the received audio signal of the second audio channel.

This may provide a very practical, low complexity and/or efficient system in many embodiments. The approach may in many scenarios allow low cost speaker units to be employed due to reduced low complexity. The approach may in many scenarios facilitate the linking of speaker units to the audio channels of the speaker bases/ charging units to which they are attached.

The first speaker base may be a charging unit. The wireless receiver may be associated with a specific identifier for wireless communications corresponding to the audio channel to which the first speaker base is linked.

In accordance with an optional feature of the invention, the speaker units are passive speaker units.

This may provide a very practical, low complexity and/or efficient system in many embodiments. The approach may in many scenarios allow low complexity and low cost speaker units to be employed. The speaker units may contain no functionality for amplifying the audio signal to be rendered by the speaker unit, or indeed any functionality for processing this signal. In some embodiments, the speaker units comprise only one or more audio transducers and a battery.

In accordance with an optional feature of the invention, each audio channel of the plurality of audio channels is linked with one of a charging unit and a speaker base.

This may provide an improved user experience in many scenarios and may specifically allow a very flexible and user friendly system which in particular may allow a user friendly charging operation.

In accordance with an optional feature of the invention, at least one of the first speaker base and the first charging unit is arranged to transmit an indication to the audio renderer if no speaker unit is attached, and wherein the audio renderer is arranged to adapt an audio rendering process in response to the indication.

This may provide increased flexibility and may specifically allow the users to dynamically alter the rendering configurations by moving (or removing) speaker units. Specifically, the approach may allow the system to be used with less speaker units than the combined number of speaker bases/ charging units.

In accordance with an optional feature of the invention, the first charging unit comprises: a power input for receiving power from an external source; a switching circuit for switching between a speaker unit power charging mode and a speaker unit power draining mode dependent on whether external power is provided to the power input from the external source, wherein the first charging unit is arranged to charge the battery of the attached speaker unit when in the speaker unit power charging mode and to power the first charging unit using power of the battery of the attached speaker unit when in the speaker unit power draining mode.

This may allow a more flexible and typically more user friendly setup. Alternatively or additionally, it may reduce manufacturing cost by being able to use the same units as both charging and non-charging speaker bases. In particular, in some embodiments, all speaker bases/ charging units may comprise the same functionality.

In accordance with an optional feature of the invention, each of the speaker units comprises a wireless receiver for receiving an audio signal of the audio channel from the audio renderer; and an audio driver for driving the audio transducer of the speaker unit in response to the received audio signal.

This may allow a more practical and/or lower complexity system in some scenarios. Specifically, the approach may allow charging units/ speaker bases to only be provided for a subset of speaker positions. Indeed, the approach may allow a system to be used having only a single charging unit and no speaker bases.

In accordance with an optional feature of the invention, the linking circuit is arranged to communicate an identification of the first audio channel to the attached speaker unit; and wherein the wireless receiver of the attached speaker unit is arranged to determine which audio signal to receive in response to the identification.

This may allow a particularly advantageous and/or low complexity implementation and/or operation.

In accordance with an optional feature of the invention, at least one speaker unit not attached to a charging unit is associated with an audio channel of the plurality of audio channels not associated with a charging unit; and the multi-channel audio rendering system further comprises a configuration circuit arranged to change an association between the at least one speaker unit and the audio channel in response to a detection of a change in speaker units being attached to the charging unit.

This may allow a particularly advantageous and/or low complexity implementation and/or operation.

In accordance with an optional feature of the invention, the audio renderer is arranged to generate audio signals from at least two audio sources for at least two audio channels of the plurality of audio channels.

The system may provide improved functionality and allow additional experiences. For example, a two-zone audio system may be supported with low complexity.

In accordance with an optional feature of the invention, the charging unit comprises a user input for inputting an association of the charging unit to an audio channel of the plurality of audio channels.

This may provide an improved user experience.

According to an aspect of the invention there is provided a home cinema system comprising a multi-channel audio rendering system as previously described.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
Fig. 1 illustrates an example of an audio rendering system in accordance with some embodiments of the invention;
Fig. 2 illustrates an example of a speaker unit for an audio rendering system in accordance with some embodiments of the invention;
Fig. 3 illustrates an example of a charging unit for an audio rendering system in accordance with some embodiments of the invention;
Fig. 4 illustrates an example of a speaker base for an audio rendering system in accordance with some embodiments of the invention;
Fig. 5 illustrates an example of a speaker unit and a speaker base for an audio rendering system in accordance with some embodiments of the invention;
Fig. 6 illustrates an example of a speaker unit and a charging unit for an audio rendering system in accordance with some embodiments of the invention;
Fig. 7 illustrates an example of an audio rendering system in accordance with some embodiments of the invention;
Fig. 8 to 12 illustrates an example of speaker unit swap for an audio rendering system in accordance with some embodiments of the invention; and
Figs. 13-16 illustrate examples of the distribution of functionality at a speaker location.

### DETAILED DESCRIPTION OF SOME EMBODIMENTS OF THE INVENTION

The following description focuses on embodiments of the invention applicable to spatial audio rendering system and in particular to a surround sound home cinema system. However, it will be appreciated that the invention is not limited to this application but may be applied to many other multi-channel audio rendering systems.

A home cinema surround sound system generates a spatial experience by rendering spatial audio channels from speakers positioned at nominal positions relative to a listening position. Typically, surround sound systems use five or seven audio channels/ speakers but other configurations are also possible.

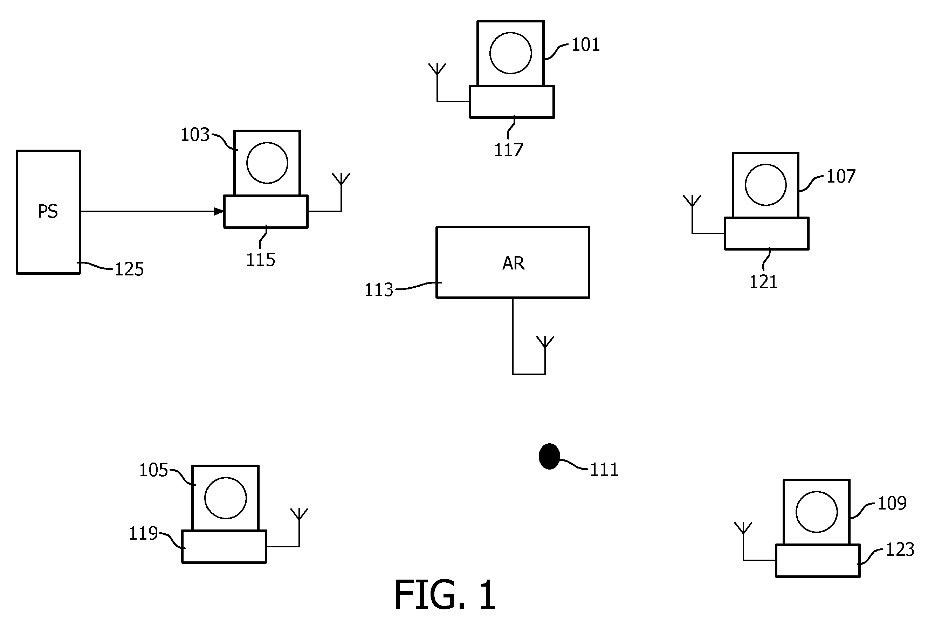

Fig. 1 illustrates an example of an audio rendering system in accordance with some embodiments of the invention. The audio rendering system is specifically a five channel surround sound system and thus includes five speaker units 101, 103, 105, 107, 109 positioned around a listening position 111. When in use, each of the five speaker units 101, 103, 105, 107, 109 renders a spatial audio channel thereby providing a spatial experience to a listener positioned substantially at the nominal listening position.

The rendering system comprises an audio renderer 113 which generates the audio signals for the different speaker units 101, 103, 105, 107, 109 from a suitable internal or external source. The audio renderer 113 may for example receive a digitally encoded surround sound signal from an internal storage, such as a hard disk, from a portable medium, such as a DVD disc, or may comprise a receiver that receives a surround sound signal from an external source.

In a conventional surround sound system each speaker is typically (semi)permanently connected to an audio output of the audio renderer 113 by a wired connection. The audio renderer 113 in conventional system has an output for each audio channel with each output being connected to a speaker positioned at the corresponding nominal connection via a wire. However, the need for wires to speakers positioned at specific location is considered a significant disadvantage. Therefore some conventional systems have been developed that use wireless speakers. However, for a fully wireless speaker the power must be provided by the speaker itself, and accordingly the wireless speakers contain a battery. As batteries have relatively low capacity, relatively frequent recharging of the battery is needed. This is considered as a main disadvantage in conventional wireless systems and typically results in the speaker having to be connected to a mains power during charging. However, this defeats the purpose of a fully wireless speaker. Removing the batteries for charging is considered inconvenient and impractical and results in a cumbersome charging process. Furthermore, it results in the speaker not being in operation during the charging process or requires that additional batteries must be available.

Thus, a main discomfort in the traditional charging process is that the loudspeaker cannot always be used in the desired location during: it must either be placed close to a power outlet, or moved to a charging station, away from its normal usage location. Thus, when the need for charging occurs, e.g. while the consumer is watching a movie, the experience will be interrupted, and the user will need to wait until the battery is charged.

The system of Fig. 1 provides a rendering system which supports an improved and facilitated charging operation that is typically substantially more user friendly, and which typically allows uninterrupted use of the rendering system with minimal impact due to the charging operation.

The system of Fig. 1 specifically uses a plurality of speaker units 101-109 that can be used at any of the speaker positions and which may dynamically and interchangeably be used at any of the positions. Thus each of the speaker units 101-109 may be used to render any of the spatial channels. In the example, this is achieved by the introduction of a charging unit/ speaker base 115-123 at each of the desired speaker positions. The charging units and speaker bases 115-123 can receive and couple to a speaker unit. Thus, either of the speaker units 101-109 can be attached to any of the charging units/ base stations 115-123. The speaker units 101-109 furthermore include a battery which can power a wireless speaker setup. For example, when positioned on a speaker base, the speaker unit 101-109 can power the arrangement. In contrast, when positioned on a charging unit, the charging unit can charge the battery of the speaker unit 101-109.

Thus, in the system, speaker units 101-109 can freely be moved between speaker bases 117-123 that cannot charge the speaker unit (but which may draw power from the speaker unit 101-109) and charging units 115 that can charge the speaker unit 101-109. Furthermore, in the system, each of the charging units 115 and speaker bases 117-123 is positioned (as close as practical) to a nominal speaker position for one of the spatial audio channels. Each of the speaker bases 117-123 and charging units 115 is thus associated with one specific spatial audio channel. When a speaker unit 101-109 is attached to a given charging unit/speaker base 115-123, the system configures itself such that the speaker unit 101-109 renders the audio channel associated with the charging unit/speaker base 115-123 to which it is attached. This allows the speaker units 101-109 to be freely moveable and interchangeable between the charging units/ speaker bases 115-123 without any substantial interruption to the service.

In the example of Fig. 1, only one charging units 115 is illustrated. However, in many embodiments it will be advantageous to have more than one charging unit, and indeed in many embodiments it is advantageous if the number of charging units is at least half the number of speaker units. For example, in the system of FIG. 1, the front position speaker bases 115, 117, 121 may all be charging units.

The approach may provide a substantially more user friendly charging process. Indeed, charging is achieved simply by swapping speaker units such that the speaker unit 101-109 requiring charging is positioned on a charging unit 115. The speaker unit 101-109 that was previously attached to the charging unit 115 can then be moved to the speaker base 117-123 that the speaker unit 101-109 now being charged was previously attached to. Due to previously having been attached to the charging unit 115, this speaker unit 101-109 should now be charged and can thus proceed to power itself and the attached speaker base 117-123 as required.

Thus, when a speaker unit 101-109 needs recharging it may simply be swapped with the speaker unit 101-109 currently attached to the charging unit 115. When the two speaker units 101-109 are swapped, the system will automatically adapt to swap the audio channels rendered by each speaker unit 101-109 as these are linked to the charging units/ speaker bases 115 -123 and not to the speaker units 101-109. Hence, the system may proceed to render the same audio with the only change being that the speaker unit 101-109 requiring change is now positioned on a charging unit 115 and is thus being recharged whereas the previously charged speaker unit 101-109 is now positioned on a speaker base 117-123 with the battery of the speaker unit 101-109 providing the power for the rendering of the audio channel.

Thus, recharging in the system of Fig. 1 may simply be achieved by the user swapping two of the speaker units 101-109 with the system immediately being ready for use and with all of the audio channels being rendered from the appropriate position.

The system of Fig. 1 specifically uses a set of cradles on which speaker units can be placed. When a speaker unit is placed on a cradle, a coupling is performed between the cradle and the speaker unit 101-109. This coupling forms an attachment between the cradle and the speaker unit 101-109. Thus, a cradle (charging unit/speaker base) is attached to a speaker unit 101-109, and vice versa, when the two are coupled together. The attachment is thus an electrical/ information attachment. Typically this may also correspond to a physical attachment of the charging unit/speaker base and the speaker unit 101-109 but it will be appreciated that this is not essential.

Each of the cradles is linked with a specific audio channel generated by the audio renderer. The speaker unit positioned on a given cradle is automatically used to render the audio signal for the audio channel associated/linked with that cradle. Thus, the speaker units are not themselves directly linked with any specific audio channel but are only indirectly linked via the cradle on which they are positioned. As a result, the speaker units can freely be positioned on any of the cradles and will automatically render the audio for the appropriate spatial channel.

The speaker units furthermore include a battery and can accordingly power the speaker unit itself and/or the cradle on which they are positioned. This may allow a completely wireless setup where both the cradle and the speaker unit at a specific position may operate without being supplied with any external power. The non-powered cradle or speaker unit comprises a wireless receiver which can receive the appropriate audio channel wirelessly transmitted from the audio renderer. Thus, a completely wireless setup can be achieved for some speaker positions.

Furthermore, at least one of the cradles additionally comprises functionality for charging a battery of a speaker unit. In the specific example of FIG. 1, one of the cradles is a charging unit 115 which is connected to an external power source 125 that specifically may be mains power provided from a power outlet. Thus, the charging unit 115 is not powered by the battery of the attached speaker unit 101-109 but is externally powered. Indeed, rather than drain power from the battery, it is arranged to supply power to the battery of the attached speaker unit 101-109 such that this battery can be charged.

In the specific example of Fig. 1, all of the cradles comprise a wireless receiver which receives the corresponding audio channel wirelessly from the audio renderer 113 and which generates the corresponding drive signals for the audio transducers of the speaker units 101-109. Thus, in the example, there are no wired connections between the audio renderer 113 and any of the speaker positions. Indeed, the only wired connection is the connection to the external power source 125 for the cradle functioning as a charging unit 115. Indeed, all of the cradles functioning as passive speaker bases 117-123 with no charging functionality are powered by the battery of the attached speaker unit 101-109. Accordingly, these cradles are completely wireless.

Thus, the system of Fig. 1 provides for a very easy setup with a minimum of wiring being required. In particular, no wiring is required from the audio renderer 113 to any of the cradles or speaker positions. Furthermore, powering of the required functionality for rendering the sound at the individual positions is achieved using batteries in the speaker units 101-109.

In addition, a very user friendly charging process is achieved in the system. Indeed, the charging of a battery is simply achieved by swapping the corresponding speaker unit with the (already charged) speaker unit currently attached to the charging unit 115. Since the audio channels are linked to the charging units/ speaker bases, the system is immediately ready to use and very little interruption is introduced by the initialization of the charging operation.

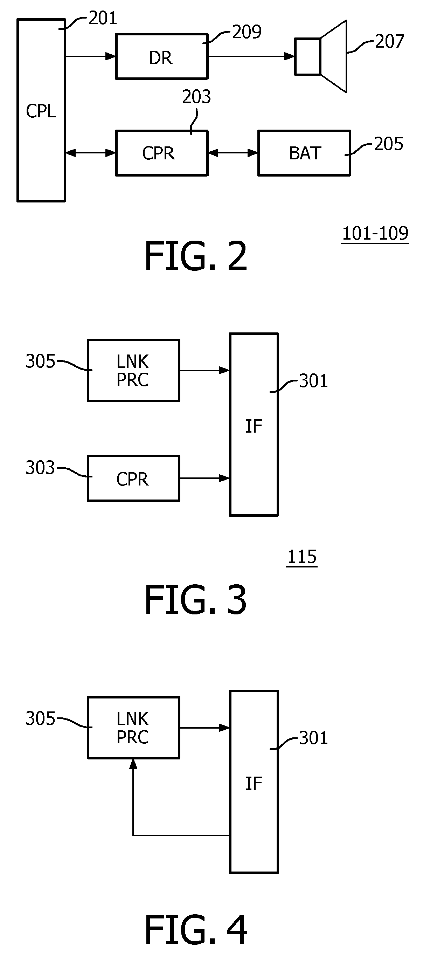

Fig. 2 illustrates an example of elements of a speaker unit 101-109 in accordance with some embodiments.

The speaker unit 101-109 comprises a coupling 201 which couples the speaker unit 101-109 to a charging unit/ speaker base 115-123.

The coupling allows various signals and/or information to be exchanged with the charging unit/ speaker base 115-123 to which the speaker unit 101-109 is attached. Specifically, the coupling may allow power to be transferred to and from the speaker unit 101-109. Furthermore, the coupling may allow audio signals and/or control data to be exchanged between the speaker unit 101-109 and the cradle. A speaker unit 101-109 may be considered to be attached to a charging unit/ speaker base 115-123 when it can exchange signals/data and/or power with the charging unit/ speaker base 115-123 via the coupling 201.

The coupling 201 may for example be a simple electrical connector which electrically connects to a complementary connector on a cradle when the speaker unit 101-109 is positioned on this cradle. In other embodiments, the coupling 201 may be partially or fully wireless. Specifically, the coupling 201 may comprise a short range wireless communication interface which connects to a corresponding wireless communication interface in a proximal cradle, and this interface may be used to exchange audio signals and/or control data. Power signals may for example be transferred using a wireless electromagnetic coupling.

The coupling 201 is coupled to a power control circuit 203 which is further coupled to a battery 205. The battery 205 is a rechargeable battery and the power control circuit 203 is arranged to charge the battery 205 when a charge current is received from the coupling 201. Thus, when the speaker unit 101-109 is attached to an active charging unit 115 supplying power to the speaker unit 101-109, the power control circuit 203 will charge the battery.

The power control circuit 203 may also in some embodiments be capable of providing power to the coupling 201. Specifically, in systems where functionality of a speaker base is powered from the speaker unit 101-109, the power control circuit 203 may provide this power to the coupling 201, e.g. by connecting the battery 205 to the coupling 201. Indeed, in some embodiments, the power control circuit 203 may simply consist in wires providing an electrical connection between the battery 205 and an electrical connector forming the coupling 201. In other embodiments, the power control circuit 203 may for example be arranged to perform more complex power processing including e.g. intelligent charging including trickle charging, current limitation of the provided power etc.

The speaker unit 101-109 furthermore comprises an audio transducer 207 which can render the audio corresponding to the audio channel the speaker unit 101-109 currently supports, i.e. the audio channel that is associated with the cradle the speaker unit 101-109 is currently attached to. The audio transducer 207 may be any suitable audio transducer such as typically a speaker driver or an arrangement of speaker drivers (including possibly cross-over filters etc).

In the example of Fig. 1, the audio transducer 207 is coupled to an audio driver 209 which is arranged to provide a drive signal corresponding to the audio channel with which the speaker unit 101-109 is currently linked (via the charging unit/ speaker base attachment) to the audio transducer 207. The audio driver 209 is coupled to the coupling 201 and may through this coupling be linked to the audio channel of the charging unit/ speaker base 115-123 to which the speaker unit 101-109 is attached. The speaker unit may consist of multiple drivers (e.g. a woofer and a tweeter) with the appropriate cross-over network. The multiple drivers may be fed by separate amplifiers (active cross-over).

In some embodiments, the linking may simply occur by the charging unit/ speaker base 115-123 directly providing the audio drive signal for the appropriate audio channel to the speaker unit 101-109, which then directly feeds it to the audio transducer 207. Indeed, in such cases, the speaker unit 101-109 may not include the audio driver 209 (or wires connecting the coupling 201 to the audio transducer 207 may be considered to correspond to the audio driver 209). In other embodiments, the audio driver 209 may merely receive an indication of the identity of the appropriate channel from the coupling 201 and it may automatically reconfigure to receive the corresponding channel and generate the corresponding drive signal. For example, the audio driver 209 may include a wireless receiver which can be reconfigured to receive audio data corresponding to an address or identification received from the charging unit/ speaker base 115-123 via the coupling.

Fig. 3 illustrates an example of elements of a charging unit 115 in accordance with some embodiments.

The charging unit 115 comprises a coupling 301 which couples to the coupling 201 of the attached speaker unit 101-109.

The coupling 301 thus allows various signals and/or information to be exchanged with the attached speaker unit 101-109. Specifically, the coupling may allow power to be transferred to the speaker unit 101-109. Furthermore, the coupling may allow audio signals and/or control data to be communicated to the speaker unit 101-109. A charging unit 115 may be considered to be attached to a speaker unit 101-109 when it can exchange signals/data and/or power with the speaker unit 101-109 via the coupling 301.

The coupling 301 may for example be a simple electrical connector which electrically connects to a complementary connector on an attached speaker unit 101-109. In other embodiments, the coupling 201 may be partially or fully wireless. Specifically, the coupling 301 may comprise a short range wireless communication interface which connects to a corresponding wireless communication interface in a proximal cradle, and this interface may be used to exchange audio signals and/or data. Power signals may for example be transferred using a wireless electromagnetic coupling.

The charging unit 115 furthermore comprises a power supply circuit 303 which can provide a supply power, and specifically a charging current to the speaker unit 101-109 via the coupling 301. The power supply circuit 303 is typically connected to an external power source such as a mains power outlet. In some embodiments, the power supply circuit 303 may be arranged to provide a complex charging functionality including e.g. trickle charging etc. In other embodiments, the power supply circuit 303 may simply provide power to the speaker unit 101-109 which then may be arranged to control the charging.

The charging unit 115 furthermore comprises a linking circuit 305 for linking the attached speaker unit 101-109 to the audio channel with which the charging unit 115 is associated. The linking circuit 305 is coupled to the coupling 301 and may in some embodiments be arranged to simply provide the appropriate audio signal to the coupling 301. The attached speaker unit 101-109 may then simply render this signal. Thus, the linking may be achieved simply by the charging unit 115 providing the appropriate audio signal to the speaker unit 101-109.

In other embodiments, the linking may e.g. be performed by the linking circuit 305 providing an identification of the appropriate channel to the speaker unit 101-109 with this subsequently reconfiguring to render the identified channel. For example, the linking circuit 305 may provide an address for wireless broadcast messages transmitted from the audio renderer 113 and containing the audio data for the appropriate audio channel.

In some embodiments, the linking circuit 305 may simply consist in a passive setting that can be read by an attached speaker unit 101-109 via the coupling 301. For example, a simple switch may be user-settable between different positions, with each position corresponding to one speaker position of the nominal spatial speaker setup. The speaker unit 101-109 may be able to read the setting of this switch via the coupling. As a simple example, a switch may have five positions corresponding to the five positions of a five channel surround set up. When positioning the charging unit 115 the user may also set the switch to correspond to the position in which the charging unit 115 is used. The five positions of the switch may be coupled to five pins in an electrical connector forming the coupling 301 such that a voltage occurs only on the pin corresponding to the current position. The speaker unit 101-109 may in such a system simply detect which of the five pins has a voltage applied to determine which of the audio channels it should render.

A speaker base may correspond directly to a charging unit with the only exception being that the speaker base need not contain any charging functionality, and thus need not contain the power supply circuit 303. However, it will also be appreciated that a speaker base may include any charging circuit but may in the absence of external power not be able to charge the battery of a speaker unit. Thus, a charging unit may also be used as a speaker base.

It will be appreciated that in some embodiments, the speaker base may not comprise any function that needs to be powered. Indeed, the speaker base could in an extreme case merely be a suitable cradle comprising a user settable switch indicating an associated channel for the cradle.

In embodiments wherein the speaker base comprises functionality that must be powered, the speaker base may further power such circuitry from the battery of the speaker unit 101-109 via the appropriate input of the coupling.

An example of elements of a speaker base are illustrated in Fig. 4.

The functionality required for operating the system and rendering the different audio channels may be distributed differently in different embodiments.

For example, the power amplification of audio signals required to drive the audio transducers may be located in the speaker units or in the charging unit/ speaker bases, or may even for some channels be located in e.g. the audio renderer. Similarly for wireless systems, the wireless receiver may be located in the charging unit/ speaker base or may be located in the speaker units.

In some embodiments, it may be advantageous to reduce the functionality of the speaker units 101-109 as much as possible. In such embodiments, the power amplification functionality may for each channel be located in the charging unit/ speaker base 115-123 or e.g. in the audio renderer 113 for some channels. Similarly, for such systems the wireless receivers used to receive the wirelessly distributed audio channels may be located in the charging unit/ speaker base 115-123. Indeed, in such embodiments the speaker units 101-109 may be completely passive entities and may only contain passive audio transducers and a battery, and these may further simply be connected to pins on an electrical connector providing the coupling to the attached charging unit/ speaker base 115-123.

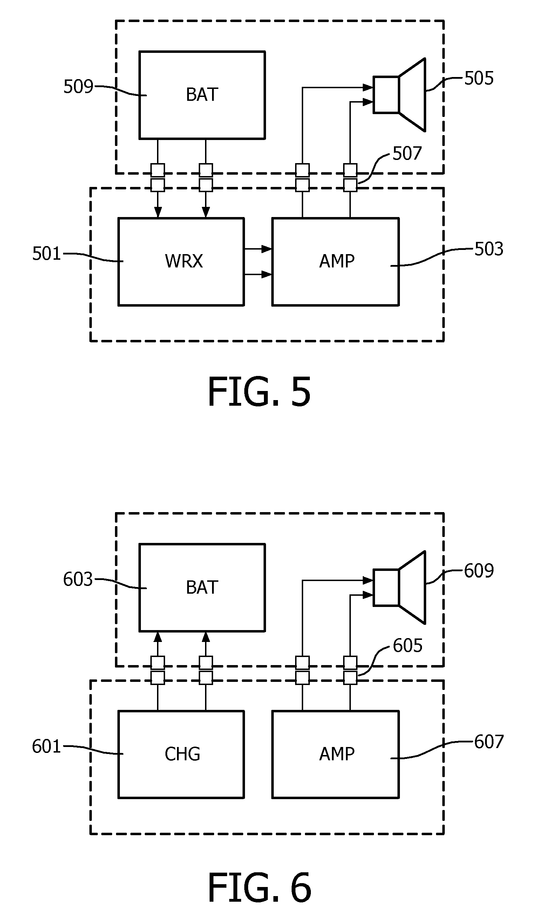

Fig. 5 illustrates an example of such an arrangement when a speaker unit 101-109 is attached to a speaker base 117-123 that cannot charge the battery. In the example, the speaker base 117-123 comprises a wireless receiver 501 which receives a specific channel of the spatial audio channels (corresponding to the position of the speaker base 117-123). The received audio data is converted to an audio signal which is fed to a wireless amplifier 503 which is connected to the audio transducer 505 of a speaker unit 101-109 via electrical connectors 507 (forming the couplings 201, 203). The circuitry of the speaker base 117-123 is powered by the battery 509 of the speaker unit 101-109 via the connectors 507.

Fig. 6 illustrates the corresponding example when the speaker unit 101-109 is positioned on a charging unit 115. In this case, the charging unit 115 comprises a charging circuit 601 which is coupled to the battery 603 of the attached speaker unit 101-109 via connectors 605 (forming the couplings 201, 301). The charging circuit 601 charges the battery 603 of the speaker unit 101-109. Furthermore, an amplifier 607 of the charging unit 115 generates a drive signal for the audio transducer 609 of the speaker unit 101-109.

In some embodiments, the audio signal for the audio channels may be provided by a wireless receiver similarly to the example of FIG. 5. However, in some embodiments, the audio signal for the appropriate audio channel may be provided directly by wires, and thus the amplifier 607 may for example be connected to the audio renderer 113 by wires for a subset of the channels.

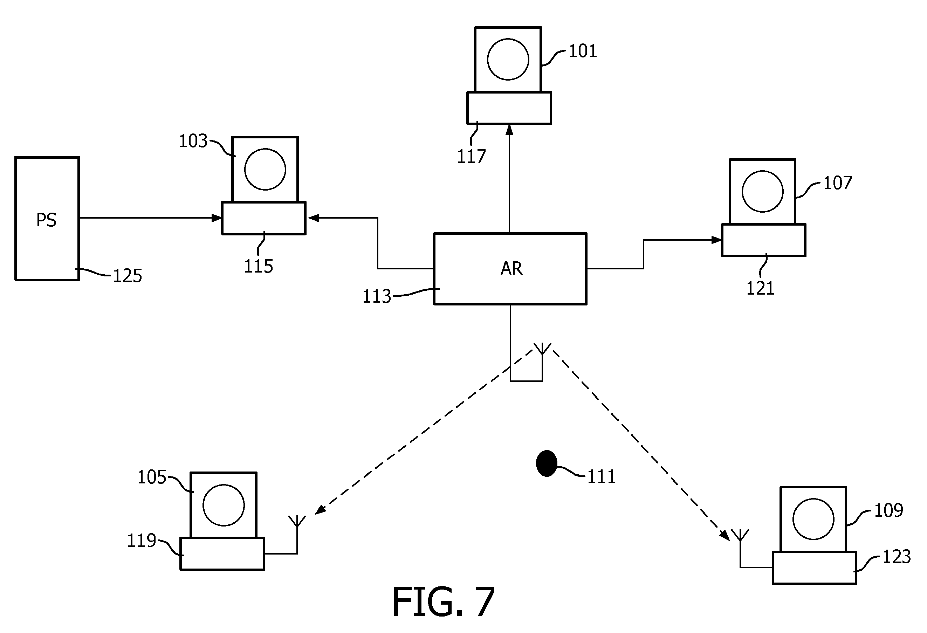

Such an example is illustrated in Fig. 7 which corresponds to the example of FIG. 1 except that only the rear surround audio channels use wireless audio distribution. For the centre and front channels the charging unit 115 and speaker bases 117-119 are directly connected to outputs of the audio renderer 113 via wires that provide the appropriate audio signal. Indeed, in such a system the power amplification may be provided by the audio renderer 113 which may (via the charging unit/ speaker base 115-123) have a direct wired connection to the audio transducer 207 of the speaker unit 101-109.

Such a system may be advantageous in many scenarios as it allows for lower complexity and cost of some of the charging unit 115 or speaker bases 117-119. Indeed, in many embodiments the audio renderer 113 is typically located close to the front and centre speaker positions and it is not a problem to connect these by wires. However, for the surround channels that are inconvenient to connect by wires, wireless communications may be used.

In some embodiments, one or more charging units may be used which can operate in different configurations. In particular, a charging unit may be able to operate as a charging unit that can power a battery of a speaker unit as previously described. However, in addition to comprising the charging functionality, the charging unit may also be capable of operating in a passive power draining mode wherein the charging unit does not charge the battery of the attached speaker unit but instead is itself powered by the battery via the couplings. Thus, the charging unit may in such systems be able to be both an active power source providing power to an attached speaker unit and to be a passive power drain incorporating functionality that is powered from the speaker unit. Thus, at least some of the functionality of the charging unit which needs to be powered can be powered either by the charging circuit/ external power source or by the attached speaker unit.

The charging unit may furthermore be arranged to switch between the different modes of operation depending on whether the charging unit is powered from an external source or not. Specifically, when an external power source is provided, the charging unit acts as an active power source and charges the battery of the attached speaker unit. However, if no external power is provided, the charging unit switches to the power draining mode wherein it powers itself from the battery of the attached speaker unit.

Such an approach may be advantageous in many embodiments since it allows the same units to be used both as active charging unit and as passive speaker base. Indeed, a user can be provided with identical cradles and randomly position these at the nominal speaker positions (e.g. setting a switch on each to indicate which spatial audio channel it is associated with). One or more of the cradles may then be connected to a power outlet and these can be used to charge the batteries of the speaker units whereas the remaining cradles will be passive cradles that cannot charge the batteries (and indeed discharges them). In many scenarios such an approach may reduce cost due to only a single type of cradle being necessary.

In some embodiments, the charging unit/ speaker bases may comprise functionality for detecting that there is no speaker unit attached (for example simply by checking if there is any power provided on connector pins assigned to supply power from the battery of the speaker units). The charging unit/ speaker base may further transmit an indication of this to the audio renderer, for example after a given duration has passed with no speaker unit being attached.

In response to receiving such an indication, the audio renderer may reconfigure its operation to compensate for the missing speaker unit. For example, if the central speaker base 117 of Fig. 1 transmits an indication that it is not attached to any speaker unit, the audio renderer 113 may proceed to distribute the central audio channel over the two front channels. Thus, in such a scenario, the audio renderer 113 may mix the centre audio signal with the signals for the left front and right front audio channels. Thus, the system may automatically adapt to missing speaker units, e.g. due to these being used elsewhere.

In the previous examples, each audio channel was associated with one charging unit/ speaker base 115-123 and each speaker unit 101-109 was used with a charging unit/ speaker base 115-123. However, in some embodiments, the speaker units 101-109 may comprise sufficient functionality for rendering audio of one of the audio channels independently of being attached to a charging unit or a speaker base.

Specifically, each of the speaker units may comprise a wireless receiver that can receive an audio signal for an audio channel and an audio driver which can drive the audio transducer of the speaker. For example, the audio driver 209 of FIG. 2 may comprise a wireless receiver and a power amplifier. Such a speaker unit can function independently but must be charged from time to time.

In the previously described approach, the speaker units were reconfigured to new channels by being attached to a new charging unit or speaker base. However, in embodiments where speaker units may be used separate from a charging unit/ speaker base, it is not practical to require attachment to a charging unit/ speaker base for a speaker unit to be linked to a new channel. For example, a system may include only a single charging unit.

However, in some embodiments, a new association may be instigated by a new attachment of a speaker unit to a charging unit and this may further initiate a new association for at least one other speaker unit, and specifically for the speaker unit that was previously associated with the audio channel linked to the charging unit, even when this is not attached to any other charging unit or speaker base.

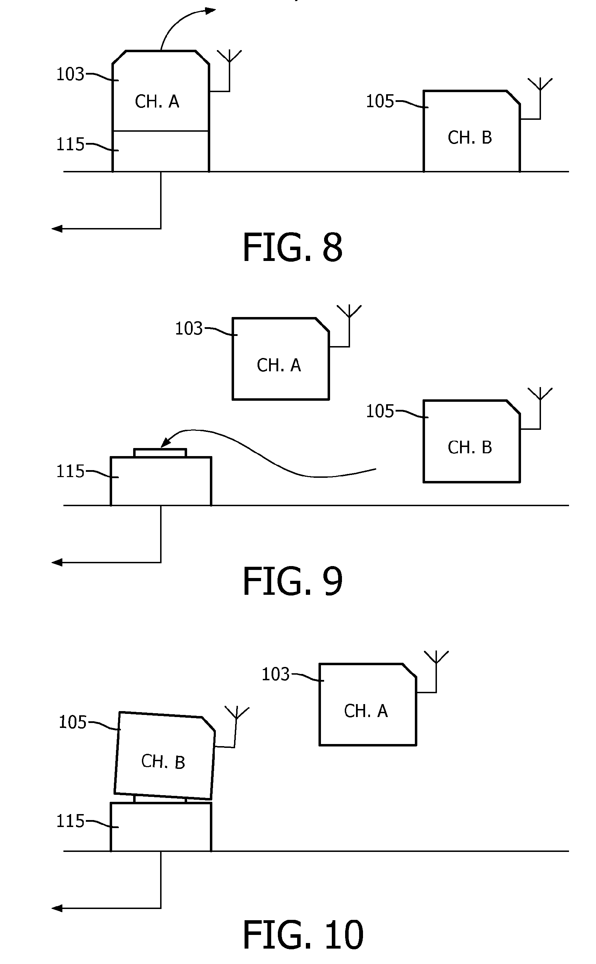

A specific example of such a reconfiguration will be described with reference to Figs. 8-12. In the example, the system comprises only a single charging unit 115 and all of the speaker units 101-109 comprise full functionality for independent rendering of audio channels. Specifically, all speaker units 101-109 comprise wireless communication functionality which can communicate with at least the audio renderer 113. In the example, the audio renderer 113 forms a centre node of a wireless network and is arranged to transmit and receive messages to and from the speaker units 101-109 wirelessly. The audio signals of the different channels are communicated in messages with specific addressing that can be detected by the wireless functionality of the speaker units 101-109 in order to select the messages with audio data for the audio channel currently rendered by the system.

Fig. 8 illustrates the initial situation. A first speaker unit 101 is attached to the charging unit 115 and has been charged. The charging unit 115 is positioned at the nominal position for the front left channel and is thus associated with this channel. The first speaker unit 101 is accordingly also linked to the front left audio channel (Channel A/ Ch A) and it detects all messages with addresses corresponding to the address for the front left channel (Ch A). A second speaker unit 105 is currently linked to the rear left channel (Channel B/ Ch B) and receives all messages with a corresponding address. Thus, due to being configured with this address, the second speaker unit 105 can render the audio for the rear left channel without needing to be attached to any charging unit/ speaker base.

The battery of the second speaker unit 105 now needs to be charged and the user therefore starts the charging by simply physically swapping the first speaker unit 101 and the second speaker unit 105, i.e. the second speaker unit 105 is positioned on the charging unit 115 and the first speaker unit 101 is positioned at the position of the rear left channel (but without being attached to a charging unit or speaker base). The system automatically reconfigures and swaps the channels being rendered by the two speaker units 103, 105. This is done in the following way.

First the first speaker unit 101 is removed from the charging unit 115 as illustrated in Fig. 9. Then the second speaker unit 105 is positioned on the cradle of the first speaker unit 101 as illustrated in Fig. 10. Thus, the second speaker unit 105 is attached to the charging unit 115.

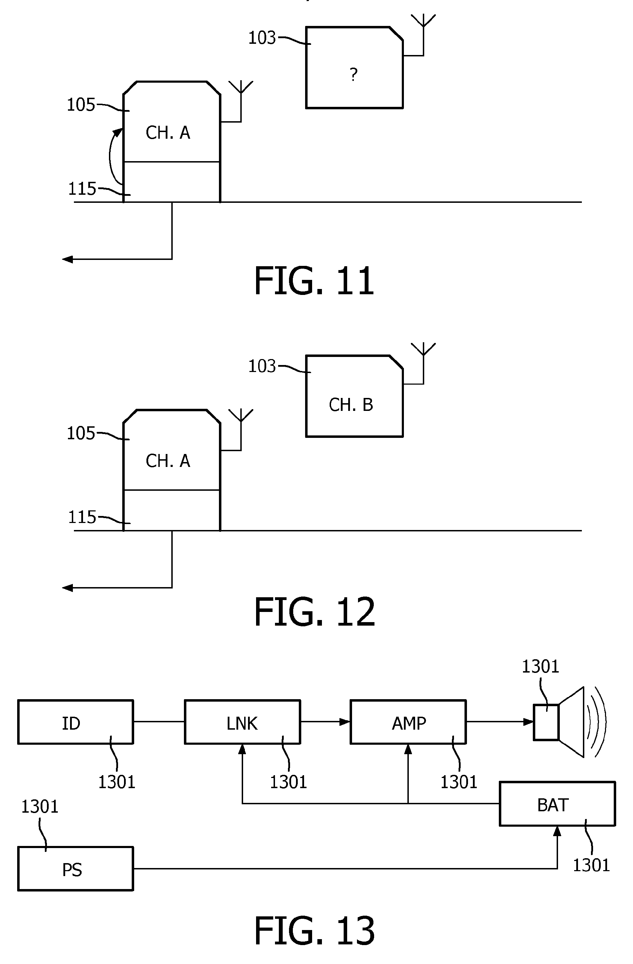

In response to this attachment, the charging unit 115 indicates to the second speaker unit 105 via the interconnection that the charging unit 115 is linked with the left front channel (Channel A). The second speaker unit 105 in response proceeds to change the link from the left rear channel to the front left channel (i.e. from channel B to channel A) as illustrated in FIG. 11. This may for example be achieved by the charging unit 115 providing the wireless transceiver of the second speaker unit 105 with the address of the messages for the left front channel.

The second speaker unit 105 furthermore transmits a message to the audio renderer 113 informing the audio renderer 113 of this change in association. In response, the audio renderer 113 accordingly determines that the rear left channel is no longer associated with any of the speaker units 103, 105. It furthermore determines that the first speaker unit 101 has been replaced and is no longer associated with any audio channel. Accordingly, the audio renderer 113 proceeds to transmit a message to the first speaker unit 101 with an instruction to link itself with the rear left channel. This may for example be achieved by transmitting a message with instructions that the first speaker unit 101 should proceed to render the audio signal transmitted with the address that is used for the rear left channel. The first speaker unit 101 proceeds to reconfigure itself to render the specified audio signal as illustrated by Fig. 11.

Thus, in the example, the change of the association of one speaker unit is detected and used to change the association of another speaker unit which is currently not attached to any charging unit or speaker base.

In the example, changes in the association were made by changing the address assigned to each speaker unit while keeping the addresses of the audio channels constant. However, it will be appreciated that in other embodiments, the addresses of each speaker unit may be constant with the addresses used for the audio channels being changed by the audio renderer.

Also, in the example, a centralized communication topology was used with all wireless communications being between speaker units and the audio renderer. However, in other embodiments a peer-to-peer topology may be used with speaker units being able to communicate directly with each other.

In the previous examples, the rendering system has been described with reference to a rendering system using multiple channels to generate a spatial experience at a given listening position. However, the approach may alternatively or additionally be used for many other applications.

For example, the approach may be used to provide audio in different locations, such as in different rooms. E.g. the described spatial setup may be located in a living room and an additional speaker base may be positioned in, say, a kitchen. The user may then simply move one speaker unit to the cradle in the kitchen to receive audio from the audio renderer 113. In such a scenario, the audio channel associated with the cradle in the kitchen may possibly be from a different source than for the charging unit/ speaker bases in the living room.

Thus, some embodiments may provide the user with the possibility of moving one of the speaker units to another room, e.g. to keep listening to the news in the kitchen, while the system in the primary room (e.g. living room) may continue to render spatial sound. Furthermore, the missing speaker unit may be detected and the audio renderer may compensate for the missing speaker when delivering audio on the remaining speaker units in the living room. This may create two zones in which either the same content or different content can be played.

In some embodiments, the speaker units or the speaker bases may comprise functionality for detecting that a recharging of a battery of an attached speaker unit is required. In response, a user indication may be provided, e.g. by a flashing light. As another example, the need for a recharge may be communicated back to the audio renderer 113 which may generate an audio indication, such as a beeb sound being rendered from the speaker unit that should be charged.

It will be appreciated that the functionality employed for each speaker position may be distributed in different ways between the speaker bases and the speaker units.

Fig. 13 illustrates an example of the functionality employed by the arrangement of a speaker base and a speaker unit at a given speaker position.

The functionality includes an ID circuit 1301 which provides an identification of the audio channel associated with the specific position. This is coupled to a link circuit 1303 which receives the audio for the identified audio link from the audio renderer. The link circuit may be wireless or wired but will generally for at least one position of the system be wireless. The link circuit 1303 is coupled to a power amplifier 1305 which receives the audio from the link circuit 1303 and which in response drives an audio transducer 1307.

The functionality furthermore includes a battery 1309 (and associated power control and charging functionality) which in the example powers at the link circuit 1303 and the power amplifier 1305. FIG. 13 further illustrates an optional power supply 1311 which can supply power to the battery 1309 and power control functionality. The power supply 1311 is only included or powered for some positions (the charging unit positions).

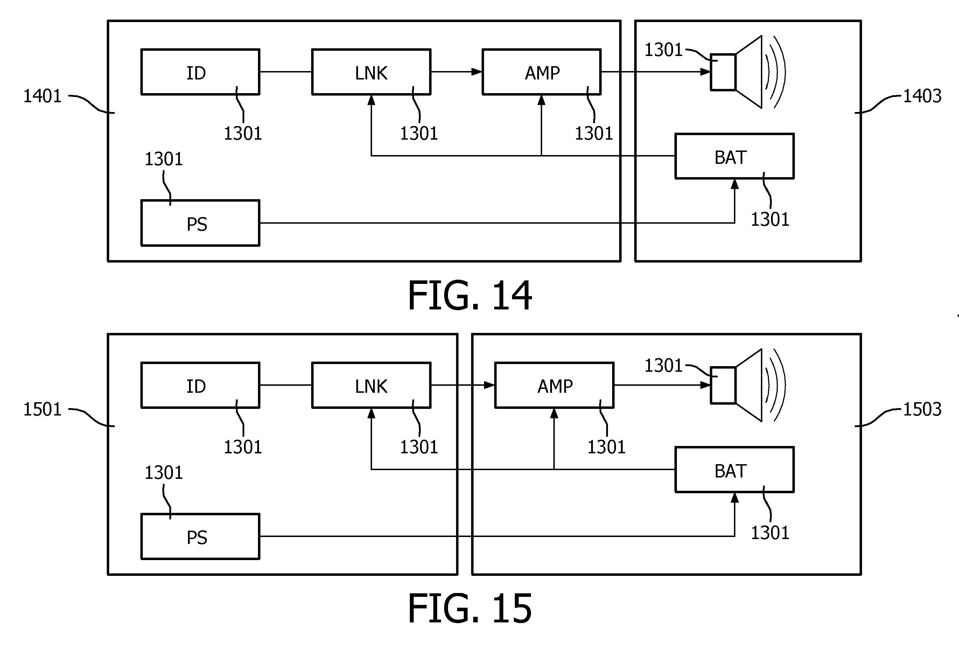

Fig. 14 illustrates an example of a functionality distribution between a speaker base 1401 and a speaker unit 1403. In the example, the functionality of the speaker unit 1403 is minimized and most of the functionality is included in the speaker base 1401.

Fig. 15 illustrates another example of a functionality distribution between a speaker base 1501 and a speaker unit 1503. In the example, the functionality is more evenly distributed between the speaker unit 1503 and the speaker base 1501.

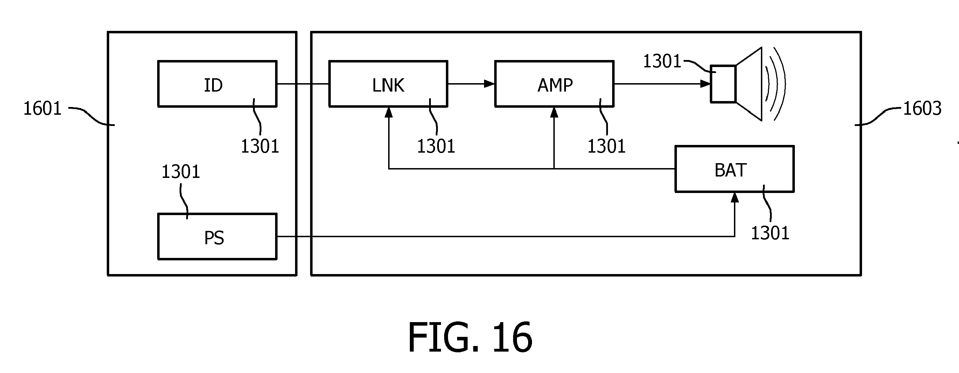

Fig. 16 illustrates an example of a functionality distribution between a speaker base 1601 and a speaker unit 1603. In the example, the functionality of the speaker base 1601 is minimized and most of the functionality is included in the speaker unit 1603.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality. Reference signs in the claims are provided merely as a clarifying example shall not be construed as limiting the scope of the claims in any way.

## Claims

1. A multi-channel audio rendering system comprising:
an audio renderer (113) for generating audio signals for a plurality of audio channels and for transmitting the audio signals;
a plurality of interchangeable speaker units (101-109),
at least one charging unit (115), being associated with a first audio channel of the plurality of audio channels,
each speaker unit (101-109) comprising:
a battery (205),
an audio transducer (207) for rendering an audio signal of a linked audio channel of the plurality of audio channels,
a first coupling (201) for coupling the speaker unit (101-109) to the at least one charging unit (115);
a power control circuit (203) coupled to the first coupling (201) and the battery (205) and arranged to charge the battery (205) when a supply power is received at the first coupling (201) from the attached at least one charging unit (115);
the at least one charging unit (115) comprising:
a second coupling (301) for coupling to the first coupling (201) of an attached speaker unit (101-109), the attached speaker unit (101-109) being a speaker unit of the plurality of interchangeable speaker units (101-109);
a power supply source (303) for providing a supply power to the first coupling (201) of the attached speaker unit (101-109);
a linking circuit (305) for linking the attached speaker unit (101-109) to the first audio channel.

2. The multi-channel audio rendering system of claim 1 wherein the charging unit (115) is coupled to an audio output of the audio renderer (113) via a wired connection, the audio output outputting an audio signal for the first audio channel; and wherein the charging unit (115) is arranged to drive the sound transducer (207) of the attached speaker unit (101-109) in accordance with the audio signal for the first audio channel.

3. The multi-channel audio rendering system of claim 1 further comprising at least a first speaker base (117-123), the first speaker base (117-123) being associated with a second audio channel of the plurality of audio channels, the first speaker base (117-123) comprising:
a third coupling (301) for coupling to a first coupling (201) of a speaker base attached speaker unit (101-109), the speaker base attached speaker unit (101-109) being a speaker unit of the plurality of speaker units (101-109); and
a linking circuit (305) for linking the speaker base attached speaker unit (101-109) to the second audio channel.

4. The multi-channel audio rendering system of claim 3 wherein the first speaker base (117-123) comprises a power circuit for powering the first speaker base (117-123) using power of the battery of the speaker base attached speaker unit (101-109) received via the third coupling (301).

5. The multi-channel audio rendering system of claim 4 wherein the first speaker base (117-123) comprises a wireless receiver (501) for receiving an audio signal of the second audio channel from the audio renderer (113); and an audio driver (503) for driving the speaker base attached speaker unit (101-109) in response to the received audio signal of the second audio channel.

6. The multi-channel audio rendering system of claim 5 wherein the speaker units (101-109) are passive speaker units.

7. The multi-channel audio rendering system of claim 3 wherein each audio channel of the plurality of audio channels is linked with one of a charging unit (115) and a speaker base (117-123).

8. The multi-channel audio rendering system of claim 3 wherein the at least one charging unit is a first charging unit and wherein at least one of the first speaker base (117-123) and the first charging unit (115) is arranged to transmit an indication to the audio renderer (113) if no speaker unit is attached, and wherein the audio renderer (113) is arranged to adapt an audio rendering process in response to the indication.

9. The multi-channel audio rendering system of claim 1 wherein the at least one charging unit forms a first charging unit (115) which comprises:
a power input for receiving power from an external source;
a switching circuit for switching between a speaker unit power charging mode and a speaker unit power draining mode dependent on whether external power is provided to the power input from the external source,
wherein the first charging unit (115) is arranged
to charge the battery of the attached speaker unit (101-109) when in the speaker unit power charging mode and
to power the first charging unit (115) using power of the battery (205) of the attached speaker unit (101-109) when in the speaker unit power draining mode.

10. The multi-channel audio rendering system of claim 1 wherein each of the speaker units (101-109) comprises a wireless receiver (209) for receiving an audio signal of the audio channel from the audio renderer (113); and an audio driver (209) for driving the audio transducer (207) of the speaker unit (101-109) in response to the received audio signal.

11. The multi-channel audio rendering system of claim 10 wherein the linking circuit (305) is arranged to communicate an identification of the first audio channel to the attached speaker unit (101-109); and wherein the wireless receiver (209) of the attached speaker unit (101-109) is arranged to determine which audio signal to receive in response to the identification.

12. The multi-channel audio rendering system of claim 1 wherein at least one speaker unit (101-109) not attached to a charging unit is associated with an audio channel of the plurality of audio channels not associated with a charging unit (115); and the multi- channel audio rendering system further comprises a configuration circuit arranged to change an association between the at least one speaker unit (101-109) and the audio channel in response to a detection of a change in speaker units (101-109) being attached to the charging unit (115).

13. The multi-channel audio rendering system of claim 1 wherein the audio renderer (113) is arranged to generate audio signals from at least two audio sources for at least two audio channels of the plurality of audio channels.

14. The multi-channel audio rendering system of claim 1 wherein the charging unit (115) comprises a user input for inputting an association of the charging unit (115) to an audio channel of the plurality of audio channels.

15. A home cinema system comprising the multi-channel audio rendering system of claim 1.

## Patentansprüche

1. Mehrkanal-Audiowiedergabesystem, umfassend:
eine Audio-Wiedergabevorrichtung (113) zum Erzeugen von Audiosignalen für mehrere Audiokanäle und zum Übertragen der Audiosignale;
mehrere untereinander austauschbare Lautsprechereinheiten (101-109),
mindestens eine Ladeeinheit (115), die einem ersten Audiokanal der mehreren Audiokanäle zugeordnet ist,
wobei jede Lautsprechereinheit (101-109) aufweist:
eine Batterie (205),
einen Audiowandler (207) zum Wiedergeben eines Audiosignals eines verknüpften Audiokanals der mehreren Audiokanäle,
eine erste Kopplung (201) zum Koppeln der Lautsprechereinheit (101-109) mit der mindestens einen Ladeeinheit (115);
eine Stromversorgungs-Steuerschaltung (203), die mit der ersten Kopplung (201) und der Batterie (205) gekoppelt und dafür ausgelegt ist, die Batterie (205) zu laden, wenn ein Versorgungsstrom an der ersten Kopplung (201) von der angeschlossenen mindestens einen Ladeeinheit (115) empfangen wird;
wobei die mindestens eine Ladeeinheit (115) aufweist:
eine zweite Kopplung (301) zur Kopplung mit der ersten Kopplung (201) einer angeschlossenen Lautsprechereinheit (101-109), wobei die angeschlossene Lautsprechereinheit (101-109) eine Lautsprechereinheit der mehreren untereinander austauschbaren Lautsprechereinheiten (101-109) ist;
eine Stromversorgungsquelle (303) zum Bereitstellen eines Versorgungsstroms an die erste Kopplung (201) der angeschlossenen Lautsprechereinheit (101-109);
eine Verknüpfungsschaltung (305) zum Verknüpfen der angeschlossenen Lautsprechereinheit (101-109) mit dem ersten Audiokanal.

2. Mehrkanal-Audiowiedergabesystem nach Anspruch 1, wobei die Ladeeinheit (115) über eine verdrahtete Verbindung mit einem Audioausgang der Audio-Wiedergabevorrichtung (113) gekoppelt ist, wobei der Audioausgang ein Audiosignal für den ersten Audiokanal ausgibt; und wobei die Ladeeinheit (115) dafür ausgelegt ist, den Schallwandler (207) der angeschlossenen Lautsprechereinheit (101-109) gemäß dem Audiosignal für den ersten Audiokanal anzusteuern.

3. Mehrkanal-Audiowiedergabesystem nach Anspruch 1, das ferner mindestens eine erste Lautsprecherbasis (117-123) umfasst, wobei die erste Lautsprecherbasis (117-123) einem zweiten Audiokanal der mehreren Audiokanäle zugeordnet ist, wobei die erste Lautsprecherbasis (117-123) aufweist:
eine dritte Kopplung (301) zur Kopplung mit einer ersten Kopplung (201) einer Lautsprecherbasis-angeschlossenen Lautsprechereinheit (101-109), wobei die Lautsprecherbasis-angeschlossene Lautsprechereinheit (101-109) eine Lautsprechereinheit der mehreren Lautsprechereinheiten (101-109) ist; und
eine Verknüpfungsschaltung (305) zum Verknüpfen der Lautsprecherbasis-angeschlossenen Lautsprechereinheit (101-109) mit dem zweiten Audiokanal.

4. Mehrkanal-Audiowiedergabesystem nach Anspruch 3, wobei die erste Lautsprecherbasis (117-123) eine Stromversorgungsschaltung zum Versorgen der ersten Lautsprecherbasis (117-123) mit Strom unter Verwendung von Strom der Batterie der Lautsprecherbasis-angeschlossenen Lautsprechereinheit (101-109), der über die dritte Kopplung (301) empfangen wird.

5. Mehrkanal-Audiowiedergabesystem nach Anspruch 4, wobei die erste Lautsprecherbasis (117-123) aufweist: einen drahtlosen Empfänger (501) zum Empfangen eines Audiosignals des zweiten Audiokanals von der Audio-Wiedergabevorrichtung (113); und
einen Audiotreiber (503) zum Ansteuern der Lautsprecherbasis-angeschlossenen Lautsprechereinheit (101-109) als Reaktion auf das empfangene Audiosignal des zweiten Audiokanals.

6. Mehrkanal-Audiowiedergabesystem nach Anspruch 5, wobei die Lautsprechereinheiten (101-109) passive Lautsprechereinheiten sind.

7. Mehrkanal-Audiowiedergabesystem nach Anspruch 3, wobei jeder Audiokanal der mehreren Audiokanäle mit einer Ladeeinheit (115) und einer Lautsprecherbasis (117-123) verknüpft ist.

8. Mehrkanal-Audiowiedergabesystem nach Anspruch 3, wobei die mindestens eine Ladeeinheit eine erste Ladeeinheit ist und wobei die erste Lautsprecherbasis (117-123) und/oder die erste Ladeeinheit (115) dafür ausgelegt ist, eine Indikation zu der Audio-Wiedergabevorrichtung (113) zu übertragen, wenn keine Lautsprechereinheit angeschlossen ist, und
wobei die Audio-Wiedergabevorrichtung (113) dafür ausgelegt ist, einen Audio-Wiedergabeprozess als Reaktion auf die Indikation anzupassen.

9. Mehrkanal-Audiowiedergabesystem nach Anspruch 1, wobei die mindestens eine Ladeeinheit eine erste Ladeeinheit (115) bildet, die aufweist:
einen Stromversorgungseingang zum Empfangen von Stromversorgung von einer externen Quelle;
ein Schaltnetzwerk zum Schalten zwischen einem Lautsprechereinheit-Stromversorgungslademodus und einem Lautsprechereinheit-Stromversorgungsentnahmemodus abhängig davon, ob dem Stromversorgungseingang von der externen Quelle externe Stromversorgung bereitgestellt wird,
wobei die erste Ladeeinheit (115) dafür ausgelegt ist,
die Batterie der angeschlossenen Lautsprechereinheit (101-109) zu laden, wenn sie sich im Lautsprechereinheit-Stromversorgungslademodus befindet, und
im Lautsprechereinheit-Stromversorgungsentnahmemodus die erste Ladeeinheit (115) unter Verwendung von Strom der Batterie (205) der angeschlossenen Lautsprechereinheit (101-109) mit Strom zu versorgen.

10. Mehrkanal-Audiowiedergabesystem nach Anspruch 1, wobei jede der Lautsprechereinheiten (101-109) aufweist: einen drahtlosen Empfänger (209) zum Empfangen eines Audiosignals des Audiokanals von der Audio-Wiedergabevorrichtung (113); und einen Audiotreiber (209) zum Ansteuern des Audiowandlers (207) der Lautsprechereinheit (101-109) als Reaktion auf das empfangene Audiosignal.

11. Mehrkanal-Audiowiedergabesystem nach Anspruch 10, wobei die Verknüpfungsschaltung (305) dafür ausgelegt ist, eine Identifikation des ersten Audiokanals an die angeschlossene Lautsprechereinheit (101-109) zu übermitteln; und wobei der drahtlose Empfänger (209) der angeschlossenen Lautsprechereinheit (101-109) dafür ausgelegt ist, als Reaktion auf die Identifikation zu bestimmen, welches Audiosignal zu empfangen ist.

12. Mehrkanal-Audiowiedergabesystem nach Anspruch 1, wobei mindestens eine nicht an eine Ladeeinheit angeschlossene Lautsprechereinheit (101-109) einem Audiokanal der mehreren Audiokanäle zugeordnet ist, der nicht einer Ladeeinheit (115) zugeordnet ist; und das Mehrkanal-Audiowiedergabesystem ferner eine Konfigurationsschaltung umfasst, die dafür ausgelegt ist, als Reaktion auf eine Detektion einer Änderung der Lautsprechereinheiten (101-109), die an die Ladeeinheit (115) angeschlossen sind, eine Zuordnung zwischen der mindestens einen Lautsprechereinheit (101-109) und dem Audiokanal zu ändern.

13. Mehrkanal-Audiowiedergabesystem nach Anspruch 1, wobei die Audio-Wiedergabevorrichtung (113) dafür ausgelegt ist, Audiosignale von mindestens zwei Audioquellen für mindestens zwei Audiokanäle der mehreren Audiokanäle zu erzeugen.

14. Mehrkanal-Audiowiedergabesystem nach Anspruch 1, wobei die Ladeeinheit (115) einen Benutzereingang zum Eingeben einer Zuordnung der Ladeeinheit (115) zu einem Audiokanal der mehreren Audiokanäle aufweist.

15. Heimkinosystem, welches das Mehrkanal-Audiowiedergabesystem nach Anspruch 1 aufweist.

## Revendications

1. Système de rendu audio multicanal comprenant :
un dispositif de rendu audio (113) destiné à générer des signaux audio pour une pluralité de canaux audio et à transmettre les signaux audio ;
une pluralité d'unités à haut-parleurs interchangeables (101-109),
au moins une unité de charge (115), qui est associée à un premier canal audio la pluralité de canaux audio,
chaque unité à haut-parleur (101-109) comprenant :
une batterie (205),
un transducteur audio (207) destiné à effectuer le rendu d'un signal audio d'un canal audio lié de la pluralité de canaux audio,
un premier raccord (201) destiné à raccorder l'unité à haut-parleur (101-109) à l'au moins une unité de charge (115) ;
un circuit de commande d'alimentation en courant (203) raccordé au premier raccord (201) et à la batterie (205) et apte à charger la batterie (205) lorsqu'un courant d'alimentation est reçu sur le premier raccord (201) en provenance de l'au moins une unité de charge (115) raccordée ;
l'au moins une unité de charge (115) comprenant :
un deuxième raccord (301) destiné à être raccordé au premier raccord (201) d'une unité à haut-parleur raccordée (101-109), l'unité à haut-parleur raccordée (101-109) étant une unité à haut-parleur de la pluralité d'unités à haut-parleurs interchangeables (101-109) ;
une source d'alimentation en courant (303) destinée à alimenter en courant le premier raccord (201) de l'unité à haut-parleur raccordée (101-109) ;
un circuit de liaison (305) destiné à relier l'unité à haut-parleur raccordée (101-109) au premier canal audio.

2. Système de rendu audio multicanal selon la revendication 1, dans lequel l'unité de charge (115) est raccordée à une sortie audio du dispositif de rendu audio (113) par l'intermédiaire d'une connexion câblée, la sortie audio fournissant en sortie un signal audio destiné au premier canal audio ; et dans lequel l'unité de charge (115) est apte à attaquer le transducteur acoustique (207) de l'unité à haut-parleur raccordée (101-109) conformément au signal audio destiné au premier canal audio.

3. Système de rendu audio multicanal selon la revendication 1, comprenant en outre au moins une première base de haut-parleur (117-123), la première base de haut-parleur (117-123) étant associée à un deuxième canal audio de la pluralité de canaux audio, la première base de haut-parleur (117-123) comprenant :
un troisième raccord (301) destiné à être raccordé à un premier raccord (201) d'une unité à haut-parleur raccordée à la base de haut-parleur (101-109), l'unité à haut-parleur raccordée à la base de haut-parleur (101-109) étant une unité à haut-parleur de la pluralité d'unités à haut-parleurs (101-109) ; et
un circuit de liaison (305) destiné à relier l'unité à haut-parleur raccordée à la base de haut-parleur (101-109) au deuxième canal audio.

4. Système de rendu audio multicanal selon la revendication 3, dans lequel la première base de haut-parleur (117-123) comprend un circuit d'alimentation en courant destinée à alimenter en courant la première base de haut-parleur (117-123) en utilisant le courant de la batterie de l'unité à haut-parleur raccordée à la base de haut-parleur (101-109) et reçu par l'intermédiaire du troisième raccord (301).

5. Système de rendu audio multicanal selon la revendication 4, dans lequel la première base de haut-parleur (117-123) comprend un récepteur sans fil (501) destiné à recevoir un signal audio du deuxième canal audio en provenance du dispositif de rendu audio (113) ; et
un circuit d'attaque audio (503) destiné à attaquer l'unité à haut-parleur raccordée à la base de haut-parleur (101-109) en réponse au signal audio reçu du deuxième canal audio.

6. Système de rendu audio multicanal selon la revendication 5, dans lequel les unités à haut-parleurs (101-109) sont des unités à haut-parleurs passives.

7. Système de rendu audio multicanal selon la revendication 3, dans lequel chaque canal audio de la pluralité de canaux audio est relié à l'une d'une unité de charge (115) et d'une base de haut-parleur (117-123) .

8. Système de rendu audio multicanal selon la revendication 3, dans lequel l'au moins une unité de charge est une première unité de charge et dans lequel au moins l'une de la première base de haut-parleur (117-123) et de la première unité de charge (115) est apte à transmettre une indication au dispositif de rendu audio (113) si aucune unité à haut-parleur n'est raccordée, et dans lequel le dispositif de rendu audio (113) est apte à adapter un processus de rendu audio en réponse à l'indication.

9. Système de rendu audio multicanal selon la revendication 1, dans lequel l'au moins une unité de charge forme une première unité de charge (115) qui comprend :
une entrée de courant destinée à recevoir un courant d'une source externe ;
un circuit de commutation destiné à commuter entre un mode de charge de courant d'unité à haut-parleur et un mode de prélèvement de courant d'unité à haut-parleur en fonction du fait qu'un courant externe est ou non fourni à l'entrée de courant en provenance de la source externe,
dans lequel la première unité de charge (115) est apte à charger la batterie de l'unité à haut-parleur raccordée (101-109) lorsqu'elle est dans le mode de charge de courant d'unité à haut-parleur et
pour alimenter en courant la première unité de charge (115) en utilisant le courant de la batterie (205) de l'unité à haut-parleur raccordée (101-109) lorsqu'elle est dans le mode de prélèvement de courant de l'unité à haut-parleur.

10. Système de rendu audio multicanal selon la revendication 1, dans lequel chacune des unités à haut-parleurs (101-109) comprend un récepteur sans fil (209) pour recevoir un signal audio du canal audio en provenance du dispositif de rendu audio (113) ; et un circuit d'attaque audio (209) destiné à attaquer le transducteur audio (207) de l'unité à haut-parleur (101-109) en réponse au signal audio reçu.

11. Système de rendu audio multicanal selon la revendication 10, dans lequel le circuit de liaison (305) est apte à communiquer une identification du premier canal audio à l'unité à haut-parleur raccordée (101-109) ; et dans lequel le récepteur sans fil (209) de l'unité à haut-parleur raccordée (101-109) est apte à déterminer le signal audio qui doit être reçu en réponse à l'identification.

12. Système de rendu audio multicanal selon la revendication 1, dans lequel au moins une unité à haut-parleur (101-109) non raccordée à une unité de charge est associée à un canal audio de la pluralité de canaux audio non associés à une unité de charge (115) ; et le système de rendu audio multicanal comprend en outre un circuit de configuration apte à modifier une association entre l'au moins une unité à haut-parleur (101-109) et le canal audio en réponse à une détection d'une modification d'unités à haut-parleurs (101-109) qui sont raccordées à l'unité de charge (115).

13. Système de rendu audio multicanal selon la revendication 1, dans lequel le dispositif de rendu audio (113) est apte à générer des signaux audio à partir d'au moins deux sources audio pour au moins deux canaux audio de la pluralité de canaux audio.

14. Système de rendu audio multicanal selon la revendication 1, dans lequel l'unité de charge (115) comprend un dispositif d'entrée d'utilisateur permettant de fournir en entrée une association de l'unité de charge (115) à un canal audio de la pluralité de canaux audio.

15. Système de cinéma maison comprenant le système de rendu audio multicanal de la revendication 1.
